# EUROPEAN PATENT APPLICATION

(11) **EP 3 871 964 A1**
(43) Date of publication of application: **01.09.2021**
(21) Application number: 20187945.9
(22) Date of filing: 27.07.2020
(51) Int. Cl.: B62K 5/007, A61G 5/04

(54) **MOBILITY SCOOTER**

(30) Priority: 26.02.2020 TW 109202159 U
(71) Applicant: Zhejiang Innuovo Rehabilitation Devices Co. Ltd, Dongyang Zhejiang (CN); Kwang Yang Motor Co., Ltd., Kaohsiung City (TW)
(72) Inventor: TANG, Shuguo, Dongyang, Zhejiang (CN); FU, Chengxian, Dongyang, Zhejiang (CN); SU, Tai-Yuan, Kaohsiung City (TW)
(74) Representative: Melchior, Robin

(57) **Abstract**

A mobility scooter has a vehicle part (2) and a seat part (3) detachably mounted on the vehicle part (2). The vehicle part (2) has a main body (21) and a mounting set (22) mounted on the main body (21). The mounting set (22) has two guiding tracks (222) and multiple first restricting components (223). Each guiding track (222) forms a guiding groove (220). The first restricting components (223) are mounted in the guiding grooves (220). The seat part (3) has multiple engaging components (32) selectively mounted in the guiding grooves (220). Each engaging component (32) has a recess (320) for receiving one of the first restricting components (223) . In a fixing position, the engaging components (32) fix the first restricting components (223). In a detached position, the engaging components (32) are separated from the first restricting components (223).

## Description

### BACKGROUND

### 1. Field of the Invention

The present invention relates to a transportation vehicle, especially to a mobility scooter.

### 2. Description of the Prior Arts

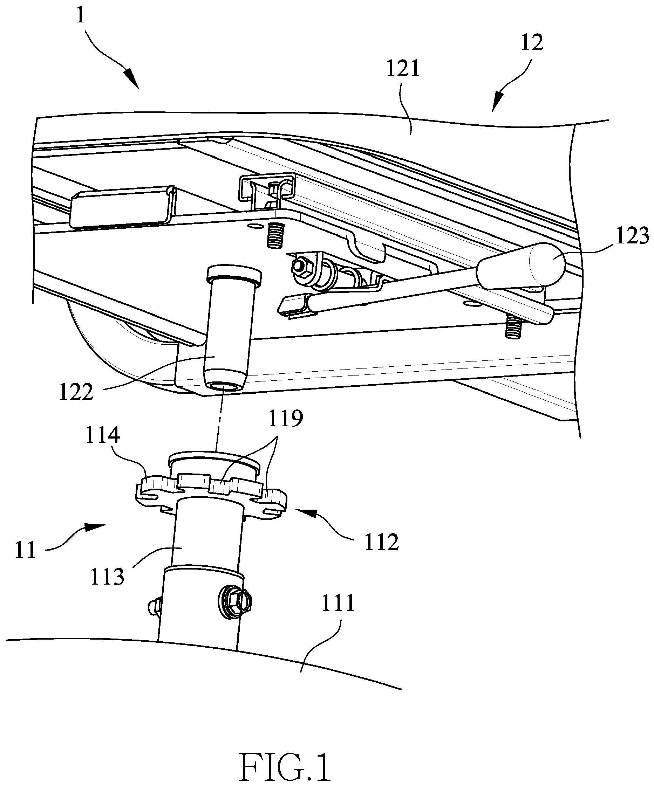

Please refer to Fig. 1. A conventional mobility scooter 1 includes a vehicle part 11 and a seat part 12. The seat part 12 is detachably mounted on the vehicle part 11. The vehicle part 11 comprises a main body 111 and a connecting mechanism 112. The connecting mechanism 112 is connected to the main body 111 and extends upward. The connecting mechanism 112 comprises a tube 113 and an annular component 114. The annular component 114 is sleeved around the tube 113 and comprises a plurality of notches 119. The seat part 12 comprises a seat 121, a supporting rod 122, and a handle 123. The supporting rod 122 is mounted under the seat 121 and configured to pass through the tube 113. The handle 123 is pivotally mounted under the seat 121, spaced apart from the supporting rod 122, and configured to engage any one of the notches 119 so that the seat part 12 is fixed on the vehicle part 11.

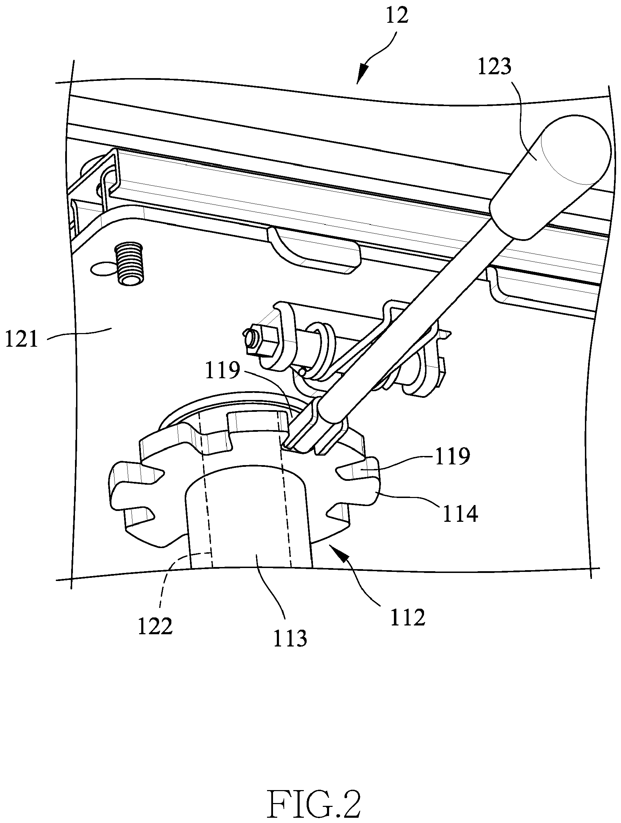

Please refer to Fig. 1 and Fig. 2. When the supporting rod 122 of the seat part 12 is mounted into the tube 113 of the connecting mechanism 112, the seat 121 is preliminarily fixed on the main body 111. Then, the handle 123 is tilted with respect to the seat 121 so that the handle 123 can be engaged in a proper notch 119 of the annular component 114, and thereby the seat 121 is firmly fixed on the connecting mechanism 112 of the vehicle part 11. On the contrary, during detachment of the seat part 12, after the handle 123 is disengaged from the notch 119, the seat 121 can be lifted to separate the supporting rod 122 from the tube 113, and then thereby detachment is completed.

However, because the supporting rod 122 is located under the seat 121, when aligning the supporting rod 122 with the tube 113, the user cannot check the location of the supporting rod 122 directly. Therefore, the user has to bend over to watch the supporting rod 122 for aligning the supporting rod 122 with the tube 113. In addition, for both installing and detaching the seat 121, the user has to exert a vertical force. Therefore, because the seat part 12 may have a certain weight, lifting the seat part 12 up or aligning the seat part 12 with the vehicle part 11 is not an easy task.

### SUMMARY OF THE INVENTION

To overcome the shortcomings, the present invention provides a mobility scooter to mitigate or obviate the aforementioned problems.

The main objective of the present invention is to provide a mobility scooter having a seat that can be installed or detached easier.

The mobility scooter has a vehicle part and a seat part. The vehicle part has a main body and a mounting set. The mounting set is mounted on the main body and has a support, two guiding tracks, and a plurality of first restricting components. The two guiding tracks are spaced apart from each other and extend in parallel with each other. Each guiding track has a guiding groove extending in a guiding direction. The first restricting components are mounted in the guiding grooves. The seat part is detachably mounted on the vehicle part and has a seat and a plurality of engaging components. The engaging components are mounted on a bottom of the seat. The engaging components correspond to the first restricting components in location respectively. The engaging components are configured to be received in the guiding grooves of the guiding tracks. Each one of the engaging components forms a recess extending in a direction opposite to the guiding direction and configured to receive the corresponding first restricting component. The seat part is capable of being moved in the guiding direction with respect to the vehicle part and between a fixing position and a detached position. In the fixing position, the engaging components are fixed respectively by the first restricting components. In the detached position, the engaging components are separated from the first restricting components.

When installing or detaching the seat part on or from the vehicle part, the user may not need to bend over to watch the bottom of the seat, but can directly watch the guiding tracks instead. So the seat part can be mounted or detached via being moved forward or backward rather than lifting up. Besides, with the engaging components mounted in the guiding grooves and spaced apart from each other, and with the recess of each one of the engaging component extending in the guiding direction, location points are distributed over a two-dimensional surface, thereby preventing the seat form being overturned, and the seat is prevented from sliding in the guiding direction. Therefore, the seat part is securely mounted on the vehicle part, which protects the rider of the mobility scooter.

Regarding the mobility scooter of the present invention, the seat part further comprises a positioning mechanism and the mounting set of the vehicle part further comprises a fixing mechanism. The positioning mechanism is mounted on the bottom of the seat. The fixing mechanism is mounted on one of the guiding tracks and corresponds to the positioning mechanism in location. When the seat part is in the fixing position, the fixing mechanism is capable of being moved between a locked position and an unlocked position. In the locked position, the fixing mechanism in the guiding groove of the corresponding guiding track thereby fixes the positioning mechanism. In the unlocked position, the fixing mechanism is out of said guiding groove, thereby being separated from the positioning mechanism.

With the fixing mechanism and the positioning mechanism interlocked with each other, when the seat part is moved to the fixing position, the seat part is fixed on the vehicle part.

Regarding the mobility scooter of the present invention, the fixing mechanism of the vehicle part comprises a sleeving element, a rod element, an elastic element, and a held element. The sleeving element has an inner space. The rod element passes through the inner space of the sleeving element. The elastic element is mounted between the rod element and the sleeving element. The held element is connected to an end, opposite the corresponding guiding track, of the rod element and configured to be operated and control the rod element to move with respect to the positioning mechanism. When the fixing mechanism is in the unlocked position, the rod element is capable of being moved away from the positioning mechanism and thereby compressing the elastic element with the sleeving element so that a resilient force is accumulated on the elastic element for driving the rod element to move toward the positioning mechanism.

Regarding the mobility scooter of the present invention, the positioning mechanism of the seat part comprises a plate portion and an enclosing portion. The plate portion is connected to the seat. The enclosing portion extends from the plate portion and away from the seat. The plate portion forms a through hole configured to receive the rod element of the fixing mechanism.

With aforesaid structure, when the fixing mechanism is in the locked position, the elastic element of the fixing mechanism provides a force to keep the rod element passing through the through hole of the positioning mechanism, which prevents the fixing mechanism from being unlocked by accident, and thereby the fixing mechanism fixes the seat part more securely.

Regarding the mobility scooter of the present invention, in one of the guiding grooves, the first restricting components are spaced apart from each other in the guiding direction.

Regarding the mobility scooter of the present invention, the fixing mechanism of the vehicle part is spaced apart in the guiding direction from the first restricting component that corresponds to the guiding groove of the guiding track in which the fixing mechanism is mounted.

Regarding the mobility scooter of the present invention, the fixing mechanism of the vehicle part is spaced apart in a direction perpendicular to the guiding direction from one of the first restricting components that in the other guiding groove.

With the multiple first restricting components are spaced apart in the guiding direction and the first restricting components are spaced apart from the fixing mechanism in a direction perpendicular to the guiding direction, after the engaging components and the positioning mechanisms are engaged, the engaged portions are distributed as an array, and thereby the seat part is firmly fixed on the vehicle part in any direction.

Regarding the mobility scooter of the present invention, each one of the engaging components of the seat part comprises: a base portion, an extending portion, and a bent portion. The base portion is connected to the seat. The extending portion extends from the base portion and away from the seat. The bent portion extends from the extending portion and bent toward the guiding direction such that the recess is formed between the base portion and the bent portion.

With the bent portion bent backward and the recess formed between the base portion and the bent portion, the recess of each one of the engaging components extends in parallel with the guiding direction D, and thereby the engaging components hook backward on the first restricting components, which prevents the seat from sliding backward and the user from falling backward by accident.

Regarding the mobility scooter of the present invention, the support of the vehicle part comprises two foldable portions spaced apart from each other and capable of being folded vertically.

With the support capable of being folded vertically, the vehicle part can be transported or stored easier.

Regarding the mobility scooter of the present invention, the vehicle part further comprises a second restricting component and the seat part further comprises a protection component. The second restricting component is mounted in one of the guiding grooves and spaced apart from the first restricting components that in the same guiding groove with the second restricting component. The protection component is mounted at the bottom of the seat and corresponds to the second restricting component in location. The protection component comprises a receiving cavity. The receiving cavity is configured to receive the second restricting component and has a vertical section and a horizontal section. The vertical section is a slot and extends toward the seat. The horizontal section extends from the vertical section in the direction opposite to the guiding direction.

With the second restricting component mounted in the L-shaped receiving cavity, because the vertical section of the receiving cavity is in a direction differing from the guiding direction, the seat part is restricted in the protection component, which prevents the seat part from overturning when the engaging components are disengaging from the first restricting components in the direction opposite to the guiding direction.

Other objectives, advantages and novel features of the invention will become more apparent from the following detailed description when taken in conjunction with the accompanying drawings.

### BRIEF DESCRIPTION OF THE DRAWINGS

The invention will be elucidated on the basis of an exemplary embodiment shown in the attached drawings, in which:
Fig. 1 is an exploded view of a conventional mobility scooter;
Fig. 2 is a partial perspective view of a seat part of the conventional mobility scooter in Fig. 1;
Fig. 3 is a perspective view of a mobility scooter in accordance with the first embodiment of the present invention;
Fig. 4 is a side view of the mobility scooter in Fig. 3;
Fig. 5 is a perspective view of a mounting set of a vehicle part of the mobility scooter in Fig. 3;
Fig. 6 is a sectional view of a fixing mechanism of the mounting set of the mobility scooter in Fig. 3;
Fig. 7 is a perspective view of a seat part of the mobility scooter in Fig. 3;
Figs. 8 and 9 are operational schematic views of the mobility scooter in Fig. 3, showing installation of the seat part on the vehicle part and detachment of the seat part from the vehicle part;
Fig. 10 is a perspective view of a seat part of a mobility scooter in accordance with the second embodiment of the present invention;
Fig. 11 is a perspective view of a vehicle part of the mobility scooter in Fig. 10; and
Fig. 12 a sectional view of the mobility scooter in Fig. 10, showing a second restricting component received in a protection component.

### DETAILED DESCRIPTION OF THE INVENTION

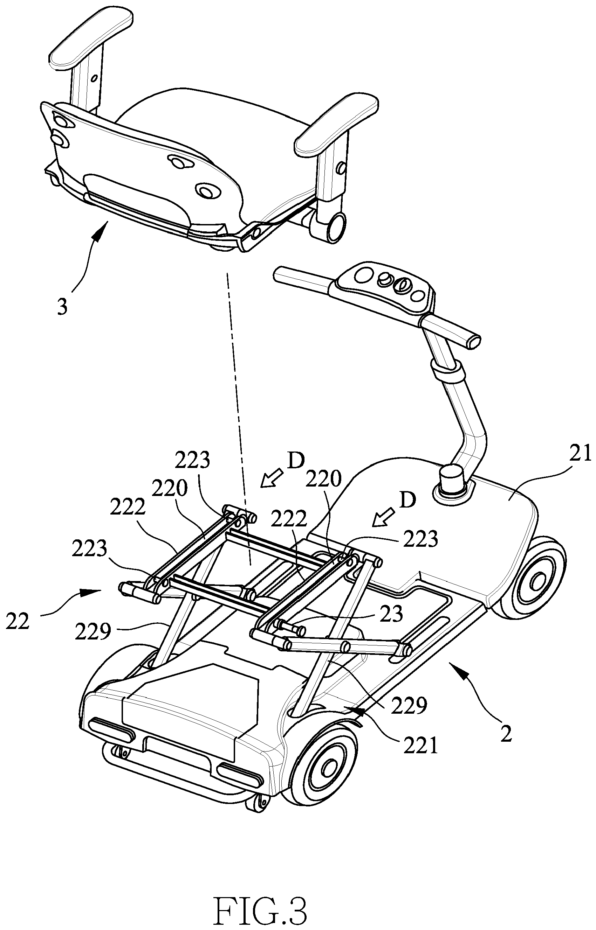

With reference to Fig. 3, a mobility scooter in accordance with a first embodiment of the present invention is provided. The mobility scooter comprises a vehicle part 2 and a seat part 3. The seat part 3 is detachably mounted on the vehicle part 2.

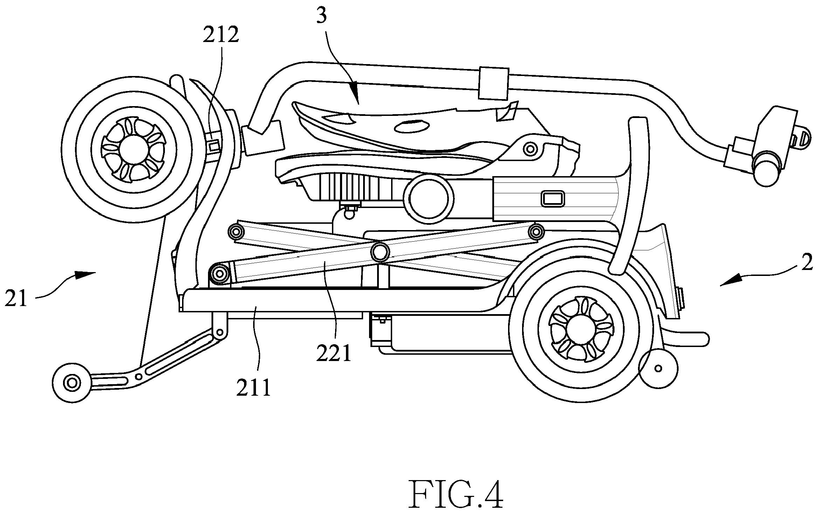

Please refer to Fig. 3 and Fig. 4. The vehicle part 2 comprises a main body 21 and a mounting set 22 mounted on the main body 21. The main body 21 comprises a main structure 211 and a folding mechanism 212. The folding mechanism 212 is connected to the main structure 211 capable of being folded toward the main structure 211. The mounting set 22 comprises a support 221, two guiding tracks 222, three first restricting components 223, and a fixing mechanism 23. The two guiding tracks 222 are mounted on the support 221, are spaced apart from each other, and extend in parallel with each other. Each one of the guiding tracks 222 comprises a guiding groove 220 extending in a guiding direction D, which is backward. The first restricting components 223 are mounted in the guiding grooves 220. The fixing mechanism 23 is mounted on one of the guiding tracks 222. The support 221 comprises two foldable portions 229 spaced apart from each other and capable of being folded vertically, which allows the vehicle part 2 to be folded vertically. Therefore, after the folding mechanism 212 is folded on the main structure 211 of the main body 21, the first embodiment of the mobility scooter can be transported or stored easier.

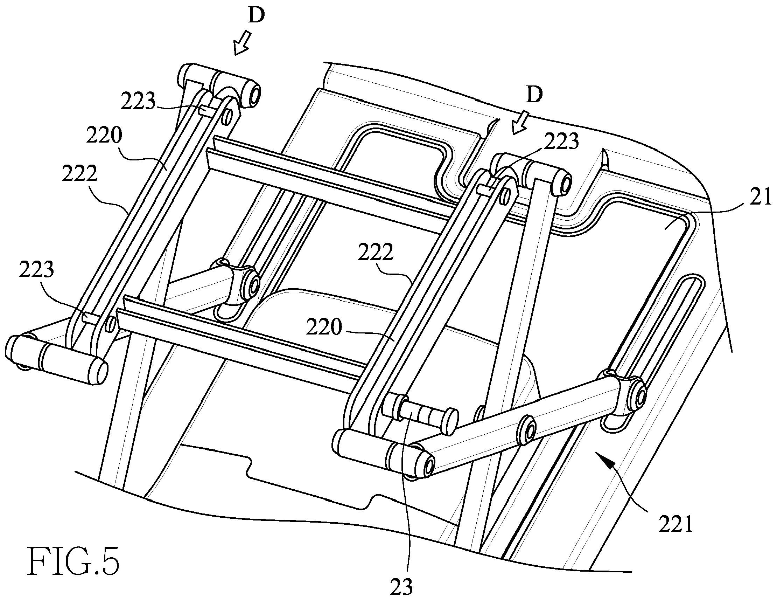

Please refer to Fig. 3 and Fig. 5. In the first embodiment, two of the first restricting components 223 are mounted in one of the guiding grooves 220 and spaced apart from each other in the guiding direction D. The remaining one first restricting component 223 and the fixing mechanism 23 are mounted in the other one of the guiding grooves 220 and spaced apart from each other in the guiding direction D. Furthermore, the fixing mechanism 23 is aligned in a direction perpendicular to the guiding direction D with one of the first restricting components 223 in the other guiding groove 220. In other words, in the two guiding grooves 220 of the two guiding tracks 222, the three first restricting components 223 and the fixing mechanism 23 are arranged as a rectangle.

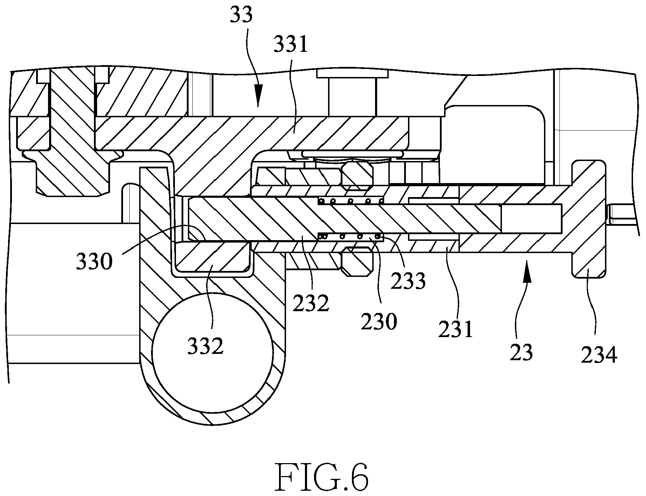

Then please also refer to Fig. 6. The fixing mechanism 23 comprises a sleeving element 231, a rod element 232, an elastic element 233, and a held element 234. The sleeving element 231 has an inner space 230. The rod element 232 passes through the inner space 230. The elastic element 233 is mounted between the rod element 232 and the sleeving element 231. The held element 234 is connected to an end, opposite the guiding track 222, of the rod element 232 and configured to be operated and control the rod element 232 to move with respect to the corresponding guiding groove 220. When the held element 234 is pulled, the rod element 232 and the sleeving element 231 compress the elastic element 233 at two opposite ends thereof, so a resilient force is accumulated on the elastic element 233 for driving the rod element 232 to move backward.

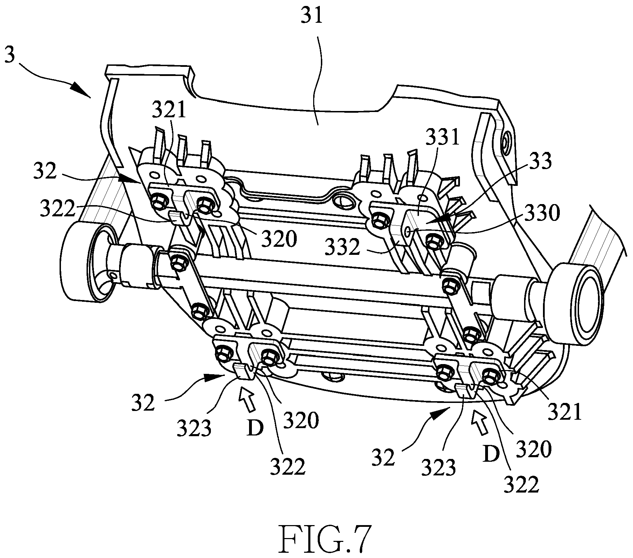

Please refer to Fig. 3 and Fig. 7. The seat part 3 comprises a seat 31, a plurality of engaging components 32, and a positioning mechanism 33. The engaging components 32 are mounted on a bottom of the seat 31 and respectively correspond to the first restricting components 223 in location. The positioning mechanism 33 is mounted on the bottom of the seat 31 and corresponds to the fixing mechanism 23 in location. Each one of the engaging components 32 comprises a base portion 321, an extending portion 322, and a bent portion 323. The base portion 321 is connected to the seat 31. The extending portion 322 extends from the base portion 321 and away from the seat 31. The bent portion 323 extends from the extending portion 322 and is bent backward such that a recess 320 is formed between the base portion 321 and the bent portion 323 and extends in a direction contrary to the guiding direction D. The positioning mechanism 33 comprises a plate portion 331 and an enclosing portion 332. The plate portion 331 is connected to the seat 31. The enclosing portion 332 extends from the plate portion 331 and away from the seat 31.

Please refer to Fig. 3, Fig. 8, and Fig. 9. The seat part 3 can be moved in the guiding direction D with respect to the vehicle part 2 between a fixing position and a detached position. In the fixing position, the engaging components 32 are fixed by the first restricting components 223 respectively. In the detached position, the engaging components 32 are separated from the first restricting components 223. During mounting of the seat part 3 on the vehicle part 2, the seat part 3 is placed in the detached position and the engaging components 32 are placed into the corresponding guiding grooves 220 first. Then, because the recesses 320 extend in the guiding direction D, as the seat 31 is pulled in the guiding direction D, the recesses 320 can be moved toward the first restricting components 223 so that the recesses 320 engage the first restricting components 223. In other words, the seat part 3 is moved to the fixing position and thereby the engaging components 32 are fixed by the first restricting components 223.

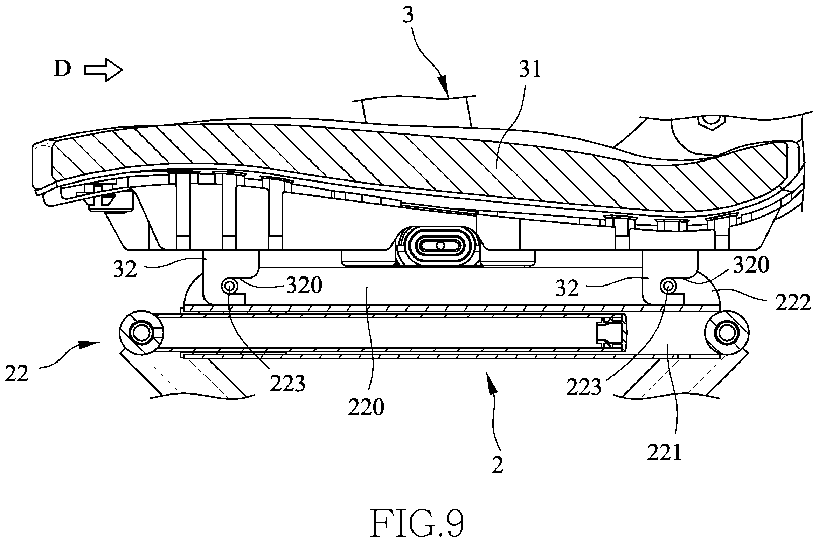

Please refer to Fig. 6 and Fig. 9. To increase stability as the seat part 3 is mounted on the vehicle part 2, when the seat part 3 is located in the fixing position, the fixing mechanism 23 can be moved between a locked position and an unlocked position. In the locked position, the fixing mechanism 23 is located in the corresponding guiding groove 220 and thereby fixes the positioning mechanism 33. In the unlocked position, the fixing mechanism 23 is out of the guiding groove 220 and thereby separates from the positioning mechanism 33. When the fixing mechanism 23 is in the locked position, the rod element 232 is received in the through hole 330 of the positioning mechanism 33. Thus, if the held element 234 is not pulled by any external force, the fixing mechanism 23 is kept in the locked position by the resilient force of the elastic element 233, so that the stability of fixing by the fixing mechanism 23 is increased. With the multiple first restricting components 223 arranged at intervals in the guiding direction D and spaced apart from the fixing mechanism 23 in a horizontal direction that is perpendicular to the guiding direction D, a location point is formed by the fixing mechanism 23 and the positioning mechanism 33 and three location points are formed by the engaging components 32 and the first restricting component 22. Said four location points form a quadrilateral to prevent the seat part 3 from overturning in any direction, so the seat part 3 is firmly fixed on the vehicle part 2.

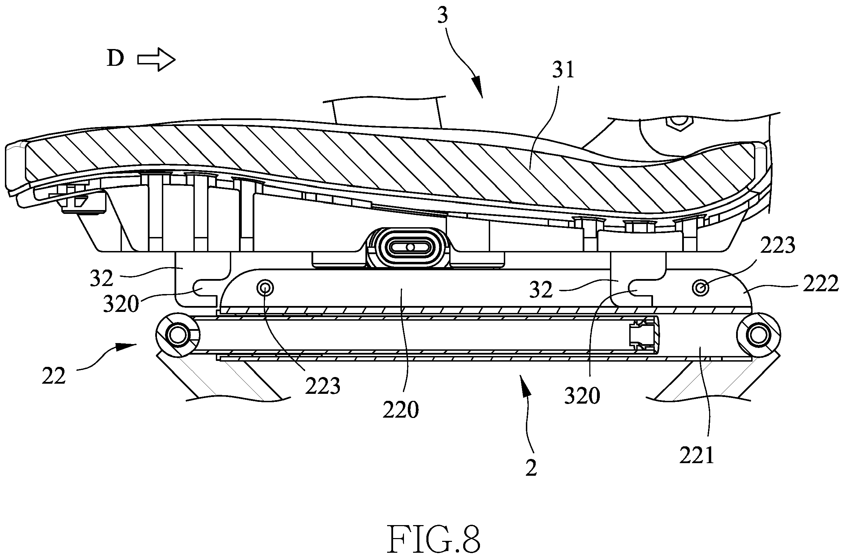

Please refer to Fig. 7 and Fig. 8. To be more specific, the guiding direction D is parallel with a backward direction of riding the mobility scooter of the present invention. When the seat part 3 is in the fixing position and a user sits on the seat part 3, with the bent portion 323 of each one of the engaging components 32 bent backward and the recesses 320 extending backward, the engaging components 32 can hook on the first restricting components 223 from backward. Therefore, the engaging components 32 can restrict the position of the seat 31 from backward and thereby prevent the seat 31 from sliding backward and the user from falling backward by accident.

Please refer to Fig. 6, Fig. 8, and Fig. 9. When the fixing mechanism 23 is in the unlocked position, the rod element 232 is moved away from the positioning mechanism 33 and compresses the elastic element 233 with the sleeving element 231, which accumulates the resilient force for driving the rod element 232 to move toward the positioning mechanism 33. Meanwhile, because the positioning mechanism 33 is not restricted by the fixing mechanism 23, the seat part 3 can be pulled in a direction opposite to the guiding direction D and then the seat part 3 is moved to the detached position where the engaging components 32 are separated from the first restricting components 223 (as shown in Fig. 8).

Please refer to Fig. 3 and Fig. 7. In the first embodiment, when the seat part 3 is mounted, before the engaging components 32 of the seat part 3 are disposed in the guiding groove 220, what the user needs to do is confirm the position of the guiding track 222 beforehand. Then, the seat part 3 is pulled forward or backward for installation or detachment. Therefore, when installing or detaching the seat part 3, the user does not need to bear the weight of the seat part 3 while lifting up or laying down the seat part 3. Besides, the user also does not need to bend over to check the bottom of the seat part 3 but can install or detach the seat part 3 standing straight instead. With such structure, installing or detaching the seat part 3 is easier.

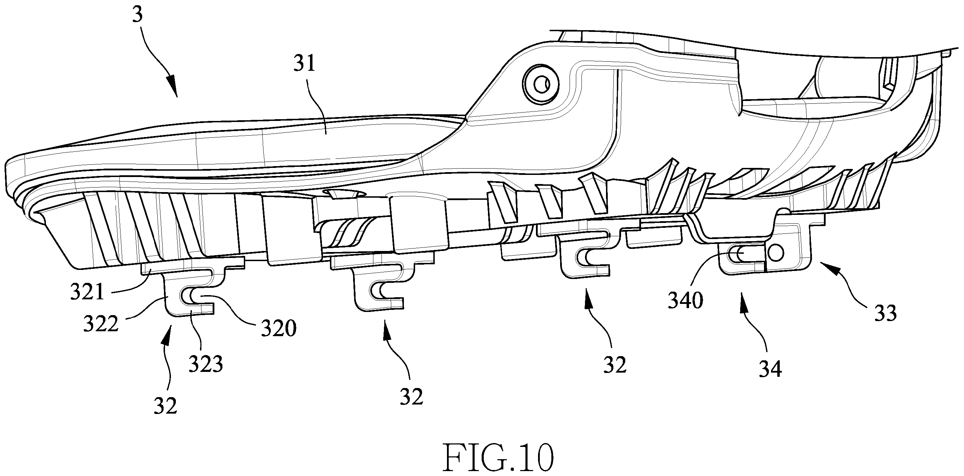

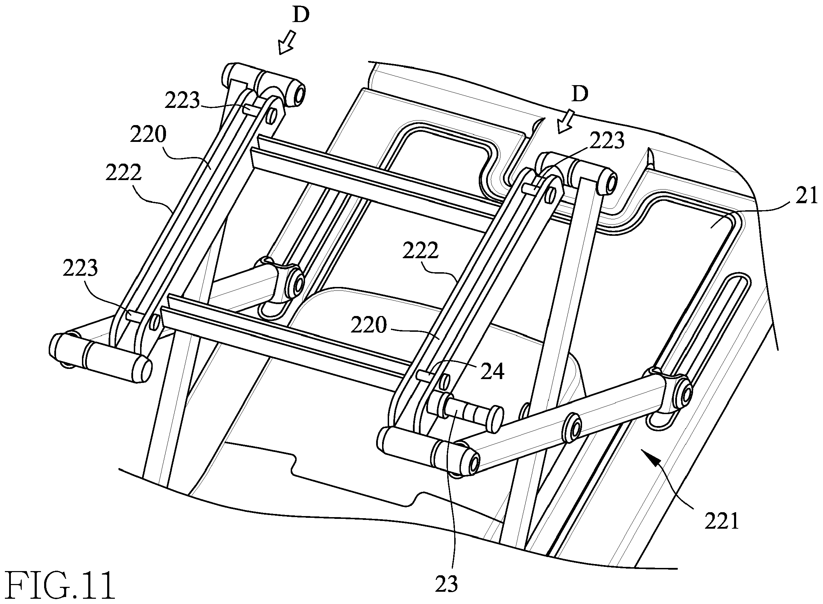

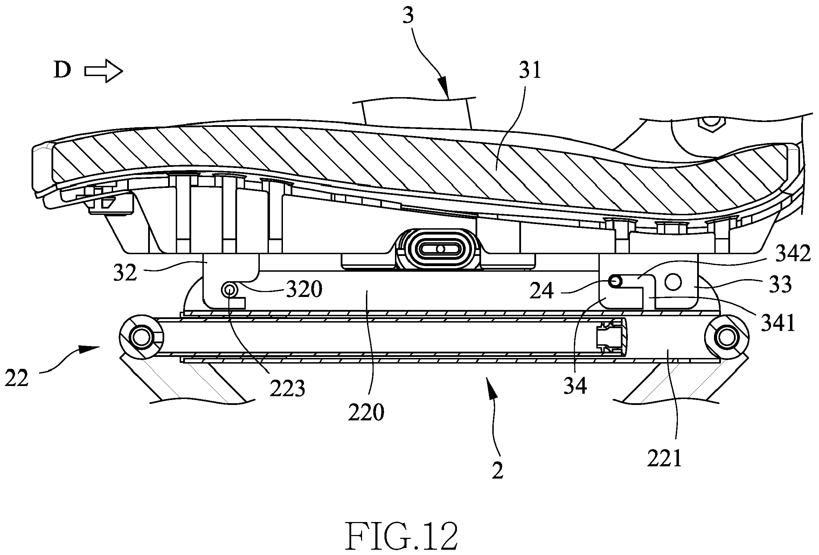

Please refer to Fig. 10 to Fig. 12. A second embodiment of the present invention is provided. The differences between the second embodiment and the first embodiment are: the vehicle part 2 further comprises a second restricting component 24, and the seat part 3 further comprises a protection component 34. The second restricting component 24 is mounted in one of the guiding grooves 220 and between the first restricting components 223 which are located in the same guiding groove 220 with the second restricting component 24. The second restricting component 24 is spaced apart from said first restricting components 223. The protection component 34 is mounted on the bottom of the seat 31 and corresponds to the second restricting component 24 in location. The protection component 34 comprises a receiving cavity 340 configured to receive the second restricting component 24. The receiving cavity 340 comprises a vertical section 341 and a horizontal section 342. The vertical section 341 is a slot and extends toward the seat 31. The horizontal section 342 extends from the vertical section 341 in the direction opposite to the guiding direction D (as shown in Fig. 12). With the vertical section 341 and the horizontal section 342, the receiving cavity 340 is L-shaped. Thus, when the seat part 3 is detached from the vehicle part 2, the engaging components 32 can be separated from the first restricting components 223 in the direction opposite to the guiding direction D. However, to separate the protection component 34 from the second restricting component 24, the protection component 34 has to be moved in the direction opposite to the guiding direction D to leave the horizontal section 342 and then has to be lifted to leave the vertical section 341, which completes detaching the seat part 3 from the vehicle part 2. Therefore, with the protection component 34 restricted by the second restricting component 24, after the positioning mechanism 33 is separated from the fixing mechanism 23, even if the seat part 3 is moved in the direction opposite to the guiding direction D by accident, the vertical section 341 of the protection component 34 still restricts the seat part 3. In other words, as long as the seat 31 is not lifted by any external force, the seat part 3 will not separate from the vehicle part 2 by accident.

Consequently, to use the mobility scooter in accordance with the present invention, the user can stand straightly to dock the seat part 3 and then move the seat part 3 horizontally to finish the installation or detachment. Besides, with the engaging components 32 of the seat part 3 respectively engaged in the first restricting components 223 of the vehicle part 2, the seat part 3 is securely mounted on the vehicle part 2 and may not be overturned.

## Claims

1. A mobility scooter **characterized in that** the mobility scooter comprises:
a vehicle part (2) comprising:
a main body (21); and
a mounting set (22) mounted on the main body (21) and comprising:
a support (221);
two guiding tracks (222) spaced apart from each other and extending in parallel with each other; each one of the guiding tracks (222) comprising:
a guiding groove (220) extending in a guiding direction (D); and
a plurality of first restricting components (223) mounted in the guiding grooves (220); and
a seat part (3) detachably mounted on the vehicle part (2) and comprising:
a seat (31), and
a plurality of engaging components (32) mounted on a bottom of the seat (31); the engaging components (32) corresponding to the first restricting components (223) in location respectively; each one of the engaging components (32) configured to be received in one of the guiding grooves (220) of the guiding tracks (222) and forming:
a recess (320) extending in a direction opposite to the guiding direction (D) and configured to receive the corresponding first restricting component (223) ;
wherein the seat part (3) is capable of being moved in the guiding direction (D) with respect to the vehicle part (2) and between:
a fixing position where the engaging components (32) are fixed respectively by the first restricting components (223); and
a detached position where the engaging components (32) are separated from the first restricting components (223).

2. The mobility scooter as claimed in claim 1, wherein:
the seat part (3) further comprises:
a positioning mechanism (33) mounted on the bottom of the seat (31); and
the mounting set (22) of the vehicle part (2) further comprises:
a fixing mechanism (23) mounted on one of the guiding tracks (222) and corresponding to the positioning mechanism (33) in location;
wherein when the seat part (3) is in the fixing position, the fixing mechanism (23) is capable of being moved between:
a locked position where the fixing mechanism (23) is in the guiding groove (220) of the corresponding guiding track (222), thereby fixing the positioning mechanism (33); and
an unlocked position where the fixing mechanism (23) is out of said guiding groove (220), thereby being separated from the positioning mechanism (33).

3. The mobility scooter as claimed in claim 2, wherein:
the fixing mechanism (23) of the vehicle part (2) comprises:
a sleeving element (231) having an inner space;
a rod element (232) passing through the inner space of the sleeving element (231);
an elastic element (233) mounted between the rod element (232) and the sleeving element (231); and
a held element (234) connected to an end, opposite the corresponding guiding track (222), of the rod element (232) and configured to be operated and control the rod element (232) to move with respect to the positioning mechanism (33);
when the fixing mechanism (23) is in the unlocked position, the rod element (232) is capable of being moved away from the positioning mechanism (33) and thereby compressing the elastic element (233) with the sleeving element (231) so that a resilient force is accumulated on the elastic element (233) for driving the rod element (232) to move toward the positioning mechanism (33).

4. The mobility scooter as claimed in claim 3, wherein the positioning mechanism (33) of the seat part (3) comprises
a plate portion (331) connected to the seat (31); and
an enclosing portion (332) extending from the plate portion (331) and away from the seat (31) and forming:
a through hole (330) configured to receive the rod element (232) of the fixing mechanism (23).

5. The mobility scooter as claimed in claim 2, wherein in one of the guiding grooves (220), the first restricting components (223) are spaced apart from each other in the guiding direction (D).

6. The mobility scooter as claimed in claim 2, wherein the fixing mechanism (23) of the vehicle part (2) is spaced apart in the guiding direction (D) from the first restricting component (223) that corresponds to the guiding groove (220) of the guiding track (222) in which the fixing mechanism (23) is mounted.

7. The mobility scooter as claimed in claim 6, wherein the fixing mechanism (23) of the vehicle part (2) is spaced apart in a direction perpendicular to the guiding direction (D) from one of the first restricting components (223) that is in the other guiding groove (220).

8. The mobility scooter as claimed in claim 1, wherein each one of the engaging components (32) of the seat part (3) comprises:
a base portion (321) connected to the seat (31);
an extending portion (322) extending from the base portion (321) and away from the seat (31); and
a bent portion (323) extending from the extending portion (322) and bent toward the guiding direction (D) such that the recess (320) is formed between the base portion (321) and the bent portion (323).

9. The mobility scooter as claimed in claim 1, wherein the support (221) of the vehicle part (2) comprises:
two foldable portions (229) spaced apart from each other and capable of being folded vertically.

10. The mobility scooter as claimed in any one of claims 1 to 6, wherein:
the vehicle part (2) further comprises:
a second restricting component (24) mounted in one of the guiding grooves (220) and spaced apart from the first restricting components (223) that are mounted in the same guiding groove (220) with the second restricting component (24);
the seat part (3) further comprises:
a protection component (34) mounted at the bottom of the seat (31) and corresponding to the second restricting component (24) in location; the protection component (34) comprising:
a receiving cavity (340) configured to receive the second restricting component (24) and comprising:
a vertical section (341) being a slot and extending toward the seat (31); and
a horizontal section (342) extending from the vertical section (341) in the direction opposite to the guiding direction (D).
